# EUROPÄISCHE PATENTSCHRIFT

(11) **EP 4 582 849 B1**
(45) Veröffentlichungstag und Bekanntmachung des Hinweises auf die Patenterteilung: **21.10.2026**
(21) Anmeldenummer: 25172155.1
(22) Anmeldetag: 02.12.2022
(51) Int. Cl.: G02B 27/01, G02B 27/28, G02B 5/09, G02B 19/00

(54) **HEAD-UP-DISPLAY BILDERZEUGUNGSEINHEIT MIT FALTSPIEGEL**
HEAD-UP DISPLAY IMAGE GENERATION UNIT WITH FOLDING MIRROR
UNITÉ DE GÉNÉRATION D'IMAGE TÊTE HAUTE AVEC MIROIR PLIANT

(30) Priorität: 16.12.2021 DE 102021214549; 17.02.2022 DE 102022201673
(43) Veröffentlichungstag der Anmeldung: 09.07.2025
(62) Dokumentnummer(n) der früheren Anmeldung(en) nach Art. 76 EPÜ: 22211118.9 / 4 198 610
(73) Patentinhaber: AUMOVIO Germany GmbH, 60488 Frankfurt am Main (DE)
(72) Erfinder: Dr. von Spiegel, Wolff, 30175 Hannover (DE); Krüger, Daniel, 30175 Hannover (DE); Dr. Junge, Christian, 30175 Hannover (DE)
(74) Vertreter: Aumovio Corporation

(56) Entgegenhaltungen:
- US-A1- 2015 036 215
- US-A1- 2019 265 472

## Beschreibung

Die vorliegende Erfindung betrifft ein Head-Up-Display, welches eine Bilderzeugungseinheit mit Faltspiegel aufweist.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einer bildgebenden Einheit oder PGU (Picture Generating Unit), einer Optikeinheit und einer Spiegeleinheit. Die bildgebende Einheit erzeugt das Bild und nutzt dazu zumindest ein Anzeigeelement. Die meisten heutigen Head-Up-Displays verwenden zur Bildgenerierung LCD-basierte Displays (LCD: Liquid Crystal Display; Flüssigkristallanzeige). Die Optikeinheit leitet das Bild auf die Spiegeleinheit. Die Spiegeleinheit ist eine teilweise spiegelnde, lichtdurchlässige Scheibe. Der Betrachter sieht also die von der bildgebenden Einheit dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des von der bildgebenden Einheit erzeugten Bildes.

Aus der DE 41 02 678 A1 ist ein Head-Up-Display für ein Fortbewegungsmittel bekannt, mit einer bildgebenden Einheit zum Erzeugen eines Bildes, einer Optikeinheit zum Projizieren des Bildes durch eine Spiegeleinheit auf eine virtuelle Bildebene, und einem Faltspiegel, dessen Einfallswinkel und Ausfallswinkel ungleich sind. Diese Eigenschaft wird beispielsweise mittels holographischer Bauteile erzielt, mittels Beugungsgitter, oder mittels Fresnel-Spiegel.

Auch die US 5,313,326 A, die WO 2014/041689 A, die US 2015/0362221 A1 und die US 2018/252917 A1 zeigen Head-Up-Displays bei denen ein Faltspiegel zum Einsatz kommt, dessen Einfallswinkel und Ausfallswinkel ungleich sind.

Bei diesen bekannten Head-Up-Displays ist der Faltspiegel, dessen Einfallswinkel und Ausfallswinkel ungleich sind, im Abbildungspfad angeordnet. Dort kann der diese Eigenschaft aufweisende Faltspiegel einen ungünstigen Einfluß auf die Bildqualität und/ oder die Störlichtempfindlichkeit haben.

Aus der US 2010/0195022 A1 ist eine Hintergrundbeleuchtung für eine Flüssigkristallanzeige bekannt, bei dem eine Kante eines Lichtleiters mit einer Vielzahl von reflektierenden Flächen versehen ist, die einen eng gebündelten Laserstrahl in ein breites Lichtbündel aufweiten. Die Verwendung einer Laserlichtquelle ist bei Head-Up-Displays allerdings hauptsächlich bei Anwendung von Mikro-Spiegel-Einheiten (sog. DMD, englisch: Digital Micro Mirror Device) bekannt, die einen Lichtstrahl sehr geringen Querschnitts mit geringem Öffnungswinkel erfordern.

Aus der US 2019/0212560 A1 ist ein Head-Up-Display bekannt, bei dem ein optisches Element einen Spiegel mit Mikrostrukturen aufweist, die Licht auf eine Anzeigeelement werfen. Als nachteilig ist anzusehen, daß die Beleuchtung des Anzeigeelements ungleichmäßig ist, sie weist dunkle Streifen auf.

Aus der US 2020/0033600 A1 ist ein Head-Up-Display bekannt, bei dem ein Flüssigkristallanzeigeelement mittels eines Polarisationskonverters möglichst viel des von einer Lichtquelle erzeugten unpolarisierten Lichts verwenden soll.

Aus der US 2019/265472 A1 ist eine Hintergrundbeleuchtung für ein Head-Up-Display bekannt, welche unpolarisiertes Eingangslicht in polarisiertes Licht umwandelt.

Ein gegenüber den bekannten Head-Up-Displays verbessertes Head-Up-Display ist erwünscht.

Ein erfindungsgemäßes Head-Up-Display ist in Anspruch 1 angegeben.

Das Head-Up-Display weist eine bildgebende Einheit zum Erzeugen eines Bildes und eine Optikeinheit zum Projizieren des Bildes durch eine Spiegeleinheit auf. Die bildgebende Einheit weist einen Faltspiegel auf. Der Faltspiegel ist zwischen einer Lichtquelle und einem von dieser durchleuchteten Anzeigeelement angeordnet in einem Anstellwinkel zur Ausbreitungsrichtung des von der Lichtquelle auf ihn einfallenden Lichts. Der Anstellwinkel ist vorzugsweise kleiner als 45°, was einen flacheren Bauraum ermöglicht. Der Faltspiegel weist Mikrostrukturen auf. Die Mikrostrukturen weisen erste Spiegelflächen auf, die in einem vom Anstellwinkel des Faltspiegels abweichenden ersten Winkel angeordnet sind, und Lücken bildend voneinander beabstandet sind. In den Lücken sind zweite Flächen in einem zweiten Winkel angeordnet. Ein Polarisator leitet Licht einer ersten Polarisation zum Anzeigeelement und Licht einer zweiten Polarisation in die Lücken. Ein Retarder wandelt die Polarisation des in die Lücken geleiteten Lichts in die erste Polarisation um. Das in die Lücken geleitete Licht wird nach Passieren der Lücken Richtung Anzeigeelement geleitet. Dies hat den Vorteil, dass ein Polarisationsrecycling erzielt wird, und dass auch von den Lücken aus Licht zum Anzeigeelement gelangt. Im Normalfall wird nur eine der von der Lichtquelle erzeugten Polarisationsrichtungen verwendet, wenn das Anzeigeelement ein linear polarisiertes Licht modulierendes Anzeigeelement ist. Dies ist beispielsweise bei Flüssigkristallanzeigen (LCD - Liquid Crystal Display) der Fall. Erfindungsgemäß wird die normalerweise nicht verwendete Polarisation mittels Polarisator und Retarder die Lücken des Faltspiegels ausnutzend in die vom Anzeigeelement benötigte Polarisation umgewandelt und diesem zugeleitet. Das in die Lücken geleitete und diese passierende Licht hat die gleiche Polarisation wie das von den Spiegelflächen polarisierte Licht. Das Anzeigeelement wird somit lückenlos mit Licht einer einzigen Polarisation beleuchtet. Dies erspart im Idealfall auch zusätzliche Homogenisierungsmaßnahmen. Ein solcher Idealfall liegt beispielsweise für bestimmte Tastverhältnisse vor. Bei einem realen System wird die Streifenstruktur beispielsweise noch mit Streuern verwischt. Eine solche Streuung dient dann auch dazu, die Eyebox auszuleuchten.

Erfindungsgemäß sind die ersten Spiegelflächen als reflektierender Polarisator ausgebildet, und die Lücken als die Polarisationsrichtung um 90° drehende Retarder. Ein solcher Retarder wird auch als λ/2-Plättchen oder Halbwellenlängenplatte bezeichnet. Diese erfindungsgemäße Variante hat den Vorteil die Funktionen von Reflexion von Licht an den Spiegelflächen und von Auffüllen der Lücken zwischen den Spiegelflächen mit Licht in einem einzigen Bauteil, das separat vorgefertigt und getestet werden kann, zu vereinen. Dies erleichtert zudem die Montage.

Erfindungsgemäß weist der Faltspiegel zwei zueinander parallele Grenzflächen auf, die beide die gleichen, zueinander versetzt angeordneten Mikrostrukturen aufweisen. Diese Ausgestaltung ist insbesondere dann vorteilhaft, wenn Lücken und Spiegelflächen in Projektion auf die Ausbreitungsrichtung des Lichts gleiche Ausdehnung haben. Der Versatz ist dann sinnvollerweise so groß wie diese Ausdehnung oder ein ganzzahliges Vielfaches davon. Vorteilhaft ist auch hier, dass die Herstellung des Faltspiegels in einem Vorgang möglich ist, und ein Justieren der Makrostrukturen zueinander dann entfällt.

Erfindungsgemäß weist der Faltspiegel zwei zueinander parallele Grenzflächen auf, von denen die obere Grenzfläche erste Spiegelflächen und die untere Grenzfläche erste Spiegelflächen aufweist. Erfindungsgemäß weisen die ersten Spiegelflächen der unteren Grenzfläche untereinander unterschiedliche zweite Winkel auf. Beispielsweise kann dies dadurch realisiert sein, daß mehrere Gruppen von ersten Spiegelflächen vorhanden sind, bei denen die Spiegelflächen einer Gruppe jeweils den gleichen zweiten Winkel aufweisen, die zweiten Winkel aber von Gruppe zu Gruppe unterschiedlich sind. In einer bevorzugten Variante weist jede der ersten Spiegelflächen der unteren Grenzfläche einen anderen zweiten Winkel auf als die jeweils anderen ersten Spiegelflächen. Dies hat den Vorteil, daß auch mittels der ersten Spiegelflächen der unteren Grenzfläche eine aufgefächerte Abstrahlung beziehungsweise ein Astigmatismus verwirklicht wird. Jede der ersten Spiegelflächen der unteren Grenzfläche weist einen Winkel auf, der als zweiter Winkel bezeichnet wird, und dessen Wert zwischen den Werten der Winkel zweier benachbarter ersten Spiegelflächen der oberen Grenzfläche liegt. Der Winkel der ersten Spiegelflächen der oberen Grenzfläche wird als erster Winkel bezeichnet. Vorteilhaft ist auch hier, dass die Herstellung des Faltspiegels in einem Vorgang möglich ist, und ein Justieren der Makrostrukturen zueinander dann entfällt.

Vorteilhaft ist der reflektierende Polarisator in einem von 90° abweichenden Winkel zur Ausbreitungsrichtung des vom Faltspiegel kommend auf ihn auftreffenden Lichts geneigt, und die spiegelnden zweiten Flächen sind parallel zum reflektierenden Polarisator angeordnet. Dies hat den Vorteil, daß vom reflektierenden Polarisator reflektiertes Licht, welches nicht oder kaum divergent ist, nicht auf die ersten Spiegelflächen zurückreflektiert wird, sondern, bei geeigneter Wahl von Winkel und Abständen, auf eine der zweiten spiegelnden Flächen in den Lücken. Von diesen wird es parallel zum von den ersten Spiegelflächen reflektierten Licht Richtung Polarisator reflektiert, von dem es, nach Anpassung der Polarisationsrichtung mittels des Retarders, transmittiert wird. Somit wird ein sehr großer Teil des Lichts beider Polarisationen genutzt, und durch die Lücken nahezu keine dunklen Bereiche hervorgerufen. Das Anzeigeelement wird sehr homogen beleuchtet.

Gemäß einer Variante der Erfindung ist der Faltspiegel Teil eines transparenten Körpers mit keilförmigem Querschnitt, bei dem die Keilgrundfläche die der Lichtquelle zugewandte Lichteintrittsfläche ist, die Mikrostrukturen auf einer der großen Seitenflächen des Keils angeordnet sind. und die andere große Seitenfläche des Keils die dem Anzeigeelement zugewandte Lichtaustrittsfläche ist. Dies hat den Vorteil, dass der transparente Körper ein großvolumiges Bauteil ist, das weniger anfällig ist als sehr dünne Bauteile, was die Handhabung bei der Herstellung vereinfacht. Der transparente Körper wird beispielsweise in großer Form gegossen und anschließend auf der Lichtaustrittsfläche mit Polarisatorfunktionalität und Retarderfunktionalität versehen, beispielsweise mir entsprechender Beschichtung versehen. Dies sind bewährte Herstellungsverfahren, die zuverlässige Resultate liefern.

Ebenfalls vorteilhaft sind Faltspiegel und Anzeigeelement parallel zueinander ausgerichtet. Lichtstrahlen, die vom Faltspiegel kommend auf das Anzeigeelement treffen habe daher eine gleichlange Wegstrecke hinter sich. Eine gleichförmige Beleuchtung des Anzeigeelements wird somit erzielt, da durch Wegstreckenunterschiede hervorgerufene Abweichungen in dieser Konstellation nicht auftreten.

Dieser Vorteil tritt auch dann ein, wenn allgemein in einem Head-Up-Display ein Faltspiegel mit der Eigenschaft dass Einfallswinkel und Ausfallswinkel makroskopisch gesehen ungleich sind parallel zu einem Anzeigeelement dieses Head-Up-Displays ausgerichtet ist.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt schematisch die bildgebende Einheit eines Head-Up-Displays;
- Fig. 3: zeigt schematisch die bildgebende Einheit eines Head-Up-Displays;
- Fig. 4: zeigt schematisch einen Faltspiegel eines Head-Up-Displays;
- Fig. 5: zeigt schematisch einen Teil einer ersten Ausführungsform
- Fig. 6: zeigt schematisch einen Teil einer zweiten Ausführungsform
- Fig. 7: zeigt schematisch einen Teil einer dritten Ausführungsform
- Fig.8: zeigt eine Variante zur ersten Ausführungsform
- Fig.9: zeigt eine weitere Ausführungsform
- Fig.10: zeigt eine erfindungsgemäße Ausführungsform mit gekrümmtem Faltspiegel
- Fig.11: zeigt eine weitere Ausführungsform mit gekrümmtem Faltspiegel.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

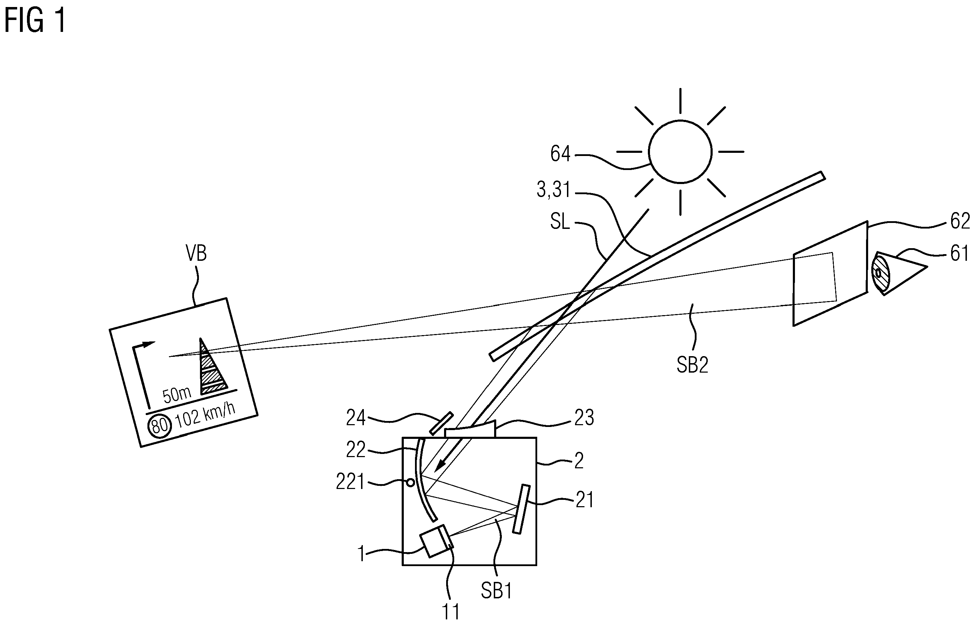

Fig. 1 zeigt eine Prinzipskizze eines Head-Up-Displays für ein Kraftfahrzeug gemäß dem Stand der Technik. Das Head-Up-Display weist eine bildgebende Einheit 1, eine Optikeinheit 2 und eine Spiegeleinheit 3 auf. Von einem Anzeigeelement 11 geht ein Strahlenbündel SB1 aus, welches von einem ersten Spiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 ist an die Krümmung der Windschutzscheibe 31 angepaßt und sorgt dafür, dass die Bildverzeichnung über die gesamte Eyebox 62 stabil ist. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der erste Spiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Ein Blendschutz 24 dient dazu, das über die Grenzfläche der Abdeckung 23 reflektierte Licht sicher zu absorbieren, sodass keine Blendung des Betrachters hervorgerufen wird. Außer dem Sonnenlicht SL kann auch das Licht einer anderen Störlichtquelle 64 auf das Anzeigeelement 11 gelangen.

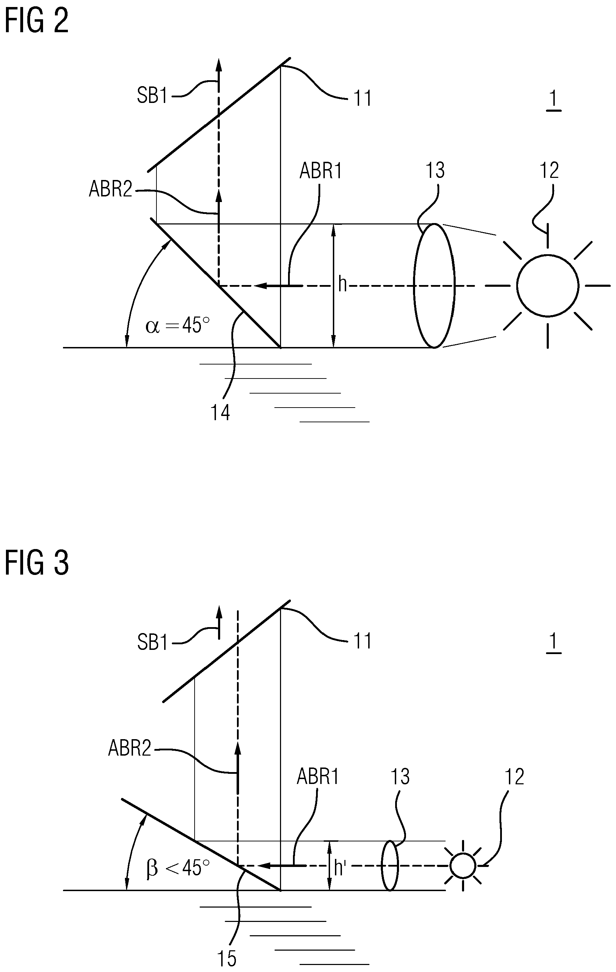

Fig. 2 zeigt schematisch die bildgebende Einheit 1 eines Head-Up-Displays. Man erkennt die Lichtquelle 12, deren Licht von einem Kollimator 13 kollimiert wird. Das kollimierte Lichtbündel weist in der Bildebene eine Höhe h in senkrecht zu seiner Ausbreitungsrichtung ABR1 auf. Es wird von einem im Winkel von α=45° zur Ausbreitungsrichtung ABR1 angeordneten Spiegel 14 reflektiert und durchleuchtet in seiner im Winkel von 90° zur Ausbreitungsrichtung ABR1 ausgerichteten Ausbreitungsrichtung ABR2 das Anzeigeelement 11, von wo aus es als Strahlenbündel SB1 in die hier nicht dargestellte Optikeinheit 2 eintritt. Das Anzeigeelement 11 ist nicht rechtwinklig zur Ausbreitungsrichtung ABR2 angeordnet, sondern in einem von 90° abweichenden Winkel, der hier besonders stark von 90° abweichend dargestellt ist.

Fig. 3 zeigt schematisch die bildgebende Einheit eines Head-Up-Displays. Man erkennt den Faltspiegel 15, der in einem Winkel von β<45° angeordnet ist. Aufgrund seiner Eigenschaft, dass Einfallswinkel und Ausfallswinkel ungleich sind, ändert sich an der prinzipiellen Ausbreitungsrichtung ABR1 des auf ihn von der Lichtquelle 12 her kommenden Lichts und des von ihm in Ausbreitungsrichtung ABR2 in Richtung Anzeigeelement 11 reflektierten Lichts im Vergleich zur vorhergehenden Abbildung nichts. Allerdings fallen die Ausdehnung der Lichtquelle 12 und des Kollimators 13, sowie die Höhe h' des kollimierten Lichtbündels kleiner aus als zur vorhergehenden Abbildung. Eine Bauraumeinsparung ist somit realisiert. Die Höhe h' in dieser Abbildung ist kleiner als die Höhe h in der vorhergehenden Abbildung. Dies bedeutet nicht nur, dass der Raumbedarf der Anordnung kleiner ist, sondern auch, dass die Beleuchtungseinheit, hier die Lichtquelle 12, nur ein flacheres Lichtbündel zu erzeugen hat, womit auch die Lichtquelle 12 kompakter ausfällt. Ein ebenfalls wichtiger Bauraumvorteil basiert auf der freieren Positionierbarkeit der Lichtquelle bei gleichzeitiger Einhaltung des Wunschwinkels im Bereich des Displays. Die kleinere Lichtquelle spart zusätzlich Platz in der Realisierungsform, beispielsweise als Leuchtdioden.

In der Abbildung ist der Abstand zwischen Anzeigeelement 11 und Faltspiegel 15 der Übersichtlichkeit halber größer dargestellt als er tatsächlich ist. Die dadurch erzielte Bauraumeinsparung ist in der Abbildung hauptsächlich an der Höhe h' erkennbar, die geringer ist als die Höhe h der vorhergehenden Abbildung. Auch scheint die Fläche der Ausleuchtung des Anzeigeelements 11 kleiner zu sein als in der vorhergehenden Abbildung, was ebenfalls nicht der Fall ist, sondern der schematischen Darstellung geschuldet ist.

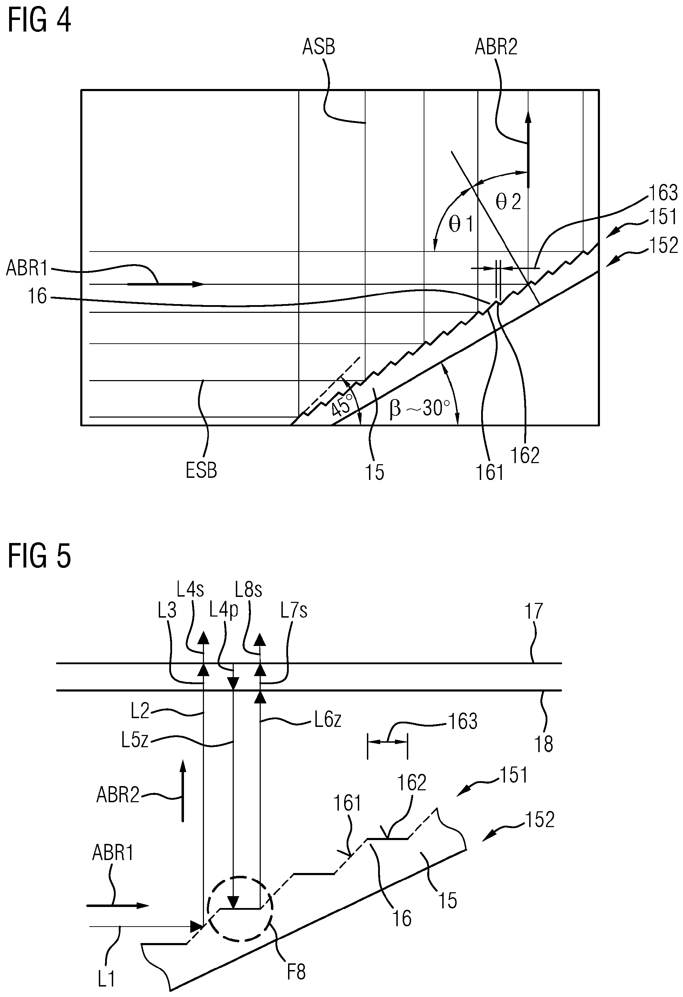

Fig. 4 zeigt schematisch einen Faltspiegel 15 eines Head-Up-Displays. Der Faltspiegel 15 weist eine erste Grenzfläche 151 auf, an der einfallendes Licht reflektiert wird, und eine zweite Grenzfläche 152. Man erkennt, dass der Faltspiegel 15 an seiner ersten Grenzfläche 151, der reflektierenden Oberfläche, viele Mikrostrukturen 16 aufweist, die jede für sich die bekannte Regel, dass Einfallswinkel gleich Ausfallswinkel ist, erfüllt. Makroskopisch gesehen, über die Mikrostrukturen 16 hinweggemittelt, sind erste Grenzfläche 151 und zweite Grenzfläche 152 parallel zueinander. Die Mikrostrukturen 16 weisen erste Spiegelflächen 161 auf, die im gezeigten Ausführungsbeispiel einen Winkel von 45° zur Ausbreitungsrichtung ABR1 und zur Ausbreitungsrichtung ABR2 aufweisen. In Ausbreitungsrichtung ABR1 befinden sich Lücken 163 zwischen jeweils zwei Spiegelflächen 161. Die Spiegelflächen 161 sind in den Lücken 163 durch geneigte zweite Flächen 162 miteinander verbunden.

Makroskopisch betrachtet ist der Einfallswinkel θ1 des Faltspiegels 15 größer als dessen Ausfallswinkel θ2, die jeweils zur Senkrechten auf den Grenzflächen 151, 152 eingezeichnet sind. Im gezeigten Ausführungsbeispiel betragen θ1=90°-β und θ2=β. Man erkennt ein Einfallstrahlenbündel ESB in Ausbreitungsrichtung ABR1, welches nach Reflexion am Faltspiegel 15 als Ausfallstrahlenbündel ASB in Ausbreitungsrichtung ASR2 den Faltspiegel 15 verlässt.

Vorkollimierte Lichtquellen, die gegebenenfalls aus mehreren nebeneinander angeordneten Einzellichtquellen, sogenannten Arrays bestehen, strahlen entweder direkt auf Diffusoren hinter dem Anzeigeelement, im folgenden auch als Display bezeichnet, oder werden vorher durch Faltspiegel umgelenkt. Bei diesen gilt makroskopisch Einfallswinkel=Ausfallswinkel. Das führt zu Bauraumkonflikten. In den Ecken/Kanten zwischen Arrayzellen können besonders starke Farb- und Helligkeitsabweichungen auftreten. Oftmals werden als Lichtquellen Leuchtdioden (englisch: **LED,** Light Emitting Diode) verwendet. Die nicht zum Display-Polarisator passende Polarisationsrichtung des LED-Lichts wird vom Display abgehalten und geht verloren. Dies erfordert zusätzliche Komponenten oder erfolgt im Display und erwärmt dieses. Eine Verkippung des Faltspiegels um einen Winkel ändert den Winkel des beleuchtenden Lichts um den doppelten Winkel.

Solche Lösungen haben den Nachteil eines erhöhten Bauraumbedarfs, der die Bildgröße einschränkt, der Erfordernis von Arrays mit relativ hohen Zellenzahlen, Farb- und Helligkeitsinhomogenitäten, sowie Effizienzeinbußen durch Verlust einer Polarisationskomponente. Verbesserte Konzepte für Bilderzeugungseinheiten, die mit gegeben Bauraumanforderungen in Einklang zu bringen sind, sind erwünscht und hier gezeigt.

Die Kernidee der Erfindung geht von einem fein gestuften Faltspiegel 15 aus, der makroskopisch von Einfallswinkel=Ausfallswinkel eines herkömmlichen Spiegels 14 abweicht, siehe Fig.4, und mit im folgenden Text beschriebenen Weiterbildungen ein Polarisationsrecycling ermöglicht. Die so gewonnenen Eigenschaften und Freiheiten eröffnen einen ganzen Strauß von Designmöglichkeiten mit Vorteilen über die Bauraumersparnis hinaus.

Damit gibt es einerseits besonders platzsparende Möglichkeiten, den Strahlengang der Bilderzeugungseinheit 1 in den Bauraum zu falten. Die Lichtverteilung wird aufgespreizt, indem sie in Streifen geteilt wird, die auseinandergezogen werden. Dadurch kann die ursprüngliche Beleuchtungseinheit verkleinert werden. Das hilft, Arraygrenzen im Bildbereich zu vermeiden und die Homogenität zu verbessern. Ausführungsvarianten erlauben toleranzunempfindliche Designs und Effizienzsteigerung durch Polarisationsrecycling.

Fig. 5 zeigt schematisch einen Teil einer ersten, hier nicht beanspruchten, Ausführungsform. Man erkennt den Faltspiegel 15 dessen obere Grenzfläche 151 Mikrostrukturen 16 aufweist, und dessen untere Grenzfläche 152 keine besonderen optischen oder geometrischen Eigenschaften aufweist. Die Mikrostrukturen 16 weisen erste Spiegelflächen 161 auf, die einen Winkel von 45° zur Ausbreitungsrichtung ABR1 des einfallenden Lichts aufweisen. Zwischen den ersten Spiegelflächen 161 befinden sich Lücken 163, in denen zweite Flächen 162 angeordnet sind, die ebenfalls als spiegelnde Flächen ausgelegt sind. Die zweiten Flächen 162 sind parallel zur Ausbreitungsrichtung ABR1 des einfallenden Lichts ausgerichtet. Oberhalb des Faltspiegels 15 sind ein Retarder 18 und ein Polarisator 17 angeordnet. Der Retarder 18 hat im vorliegenden Ausführungsbeispiel die Eigenschaft einer Viertelwellenlängenplatte, das heißt, er wandelt linear polarisiertes Eingangslicht in zirkular polarisiertes Ausgangslicht um, und umgekehrt. Der Polarisator 17 ist ein reflektierender Polarisator, der linearpolarisiertes Licht einer erste Polarisationsrichtung passieren lässt, und senkrecht dazu polarisiertes Licht reflektiert.

Von links fällt von der Lichtquelle 12 erzeugtes und vom Kollimator 13 kollimiertes unpolarisiertes Licht L1 in Ausbreitungsrichtung ABR1 auf den Faltspiegel 15. Der Übersichtlichkeit halber ist hier nur ein Lichtstrahl beispielhaft eingezeichnet. Dieses unpolarisierte Licht L1 wird von den Spiegelflächen 161 reflektiert. Es gelangt in Ausbreitungsrichtung ABR2 als unpolarisiertes Licht L2 zum Retarder 18, passiert diesen und verlässt diesen als unpolarisiertes Licht L3. Es trifft auf den reflektierenden Polarisator 17, der s-polarisiertes Licht L4s passieren lässt (transmittiert) und p-polarisiertes Licht L4p zurückwirft (reflektiert). Dies ist der Übersichtlichkeit halber in der Abbildung nach rechts versetzt schematisch dargestellt. Das p-polarisierte Licht L4p passiert den Retarder 18 und verlässt diesen als zirkular polarisiertes Licht L5z. Dieses trifft auf die spiegelnde zweite Flächen 162 und wird von diesen als zirkular polarisiertes Licht L6z wieder zum Retarder 18 reflektiert. Es passiert diesen und verlässt diesen als s-polarisiertes Licht L7s. Dieses passiert den reflektierenden Polarisator 17 da es nun die Polarisationsrichtung aufweist, die er nicht reflektiert, sondern transmittiert. Somit gelangt weiteres s-polarisiertes Licht L8s Richtung Anzeigeelement 11.

In der Abbildung ist das jeweils beschriebene Licht Lxn (x=1,2,... ; n=p/z/s/_) parallel zur jeweiligen Ausbreitungsrichtung ABR1, ABR2 gezeichnet, und nach einer Reflexion am Polarisator 17 oder an einer spiegelnden zweiten Fläche 162 seitlich versetzt abgebildet. Letzteres deutet an, dass das Licht im Normalfall nicht aus ideal parallelen Strahlen besteht, sondern aus zumindest leicht divergenten Strahlen. Diese werden vom Polarisator 17 zu einem großen Teil schräg reflektiert, sodass sie auf eine der spiegelnden zweiten Fläche 162 gelangen, und dort erneut reflektiert werden. Zusätzlich oder alternativ können die ersten Spiegelflächen 161 mit einer Wölbung versehen sein, die das von ihnen reflektierte Licht L2 bereits divergenter macht als das auf sie treffende Licht L1. Weitere Möglichkeiten bestehen darin, den Polarisator zu wellen oder zu neigen. Bei Neigung wird vorteilhafterweise die Neigung der Spiegelflächen 162 angepasst, um die Winkelabweichung zu minimieren. Mit einer oder mehreren dieser Maßnahmen füllt bereits ein Teil des vom Polarisator 17 transmittierten Lichts L4s einen Teil der aufgrund der Lücken 163 verursachten dunklen Bereiche im auf das Anzeigeelement 11 zu laufenden Lichts auf. Zum anderen gelangt Licht L8s auch in diese dunklen Bereiche. Es gelangt mehr des ursprünglich eintreffenden Lichts L1 zum Anzeigeelement 11 und weist ein gleichmäßigeres Helligkeitsprofil auf. Das Anzeigeelement 11 befindet sich im Abstand oberhalb des Polarisators 17 und ist hier nicht eingezeichnet. Der markierte Bereich F8 kann gemäß einer weiter unten beschriebenen Variante vorteilhaft ausgestaltet werden.

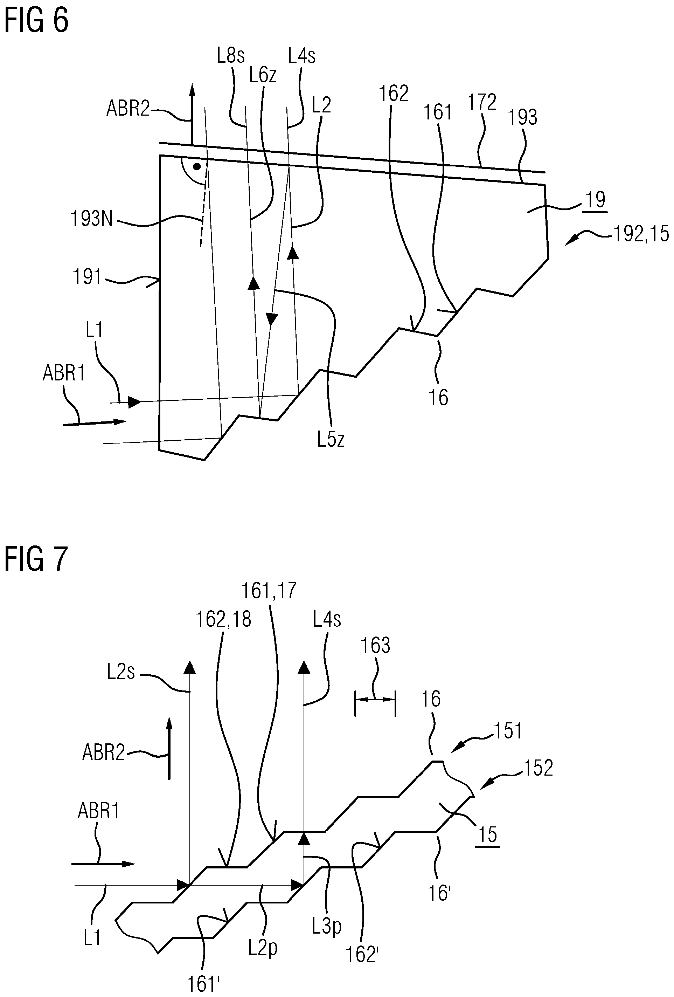

Fig. 6 zeigt schematisch einen Teil einer zweiten, hier nicht beanspruchten, Ausführungsform. Hier ist der Faltspiegel 15 Teil eines transparenten Körpers 19. Der transparente Körper 19 weist einen keilförmigen Querschnitt auf, was hier im Querschnitt gezeigt ist. Die Spitze des Keils, die sich in der Abbildung rechts befindet, ist gekappt und daher nicht abgebildet. Die Keilgrundfläche 191 ist die der Lichtquelle zugewandte Lichteintrittsfläche. Die Mikrostrukturen 16 sind auf einer der großen Seitenflächen 192 des Keils angeordnet. Die andere große Seitenfläche 193 des Keils bildet die dem Anzeigeelement 11 zugewandte Lichtaustrittsfläche.

In einer hier nicht dargestellten Ausführungsform sind die Mikrostrukturen 16, der Polarisator 17 und der Retarder 18 so angeordnet wie in der vorhergehenden Abbildung gezeigt. Bei der hier gezeigten Ausführungsform sind die ersten Spiegelflachen 161, wie zuvor beschrieben, in einem Winkel von 45° zu den Ausbreitungsrichtungen ABR1, ABR2 angeordnet. Die spiegelnden zweiten Flächen 162 sind allerdings nicht parallel zur Ausbreitungsrichtung ABR1 angeordnet, sondern in einem spitzen Winkel dazu verkippt. Sie sind so geneigt, dass sie dem von links einfallenden Licht L1 auf seinem Weg zu einer der ersten Spiegelflächen 161 nicht im Wege stehen, sondern in dessen Ausbreitungsrichtung gesehen von einer ersten Spiegelfläche 161 zur nächsten weggeneigt sind. Die andere große Seitenfläche 193 des keilförmigen transparenten Körpers 19 weist dieselbe Neigung auf wie die spiegelnden zweiten Flächen 162. Man erkennt dies an dem spitzen Winkel zwischen der Normalen 193N der Seitenfläche 193 und der Ausbreitungsrichtung ABR2. Der hier als reflektiver zirkularer Polarisator 172 ausgebildete Polarisator, der auch die Funktion des Retarders 18 in sich vereint, ist auf der Seitenfläche 193 angeordnet, und weist somit dieselbe Neigung auf. Die erste große Seitenfläche 192 ist mit einer Spiegelbeschichtung versehen.

Von links fällt von der Lichtquelle 12 erzeugtes und vom Kollimator 13 kollimiertes unpolarisiertes Licht L1 in Ausbreitungsrichtung ABR1 auf den Faltspiegel 15. Der Übersichtlichkeit halber sind hier nur wenige Lichtstrahlen beispielhaft eingezeichnet. Dieses unpolarisierte Licht L1 wird von den Spiegelflächen 161 reflektiert. Es gelangt in Ausbreitungsrichtung ABR2 als unpolarisiertes Licht L2 zum reflektiven zirkularen Polarisator 172. Dieser transmittiert s-polarisiertes Licht L4s und reflektiert zirkular polarisiertes Licht L5z. Aufgrund der geringfügigen Verkippung der Senkrechten auf der Seitenfläche 193 zur Ausbreitungsrichtung ABR2 breitet sich dieses zirkular polarisierte Licht L5z in einem von 0° abweichenden Winkel zur Ausbreitungsrichtung ABR2 aus. Dieses trifft auf die spiegelnde zweite Flächen 162 und wird von diesen als zirkular polarisiertes Licht L6z wieder zum Retarder 18 reflektiert. Aufgrund der geneigten Anordnung der spiegelnden zweiten Flächen 162 breitet es sich nun wieder parallel zur Ausbreitungsrichtung ABR2 aus. Es trifft auf den reflektiven zirkularen Polarisator 172 und wird von diesem transmittiert. Somit gelangt weiteres s-polarisiertes Licht L8s Richtung Anzeigeelement 11.

Die Abbildung ist somit auch ein Beispiel für die Variante, bei der der reflektierende Polarisator 172 in einem von 90° abweichenden Winkel zur Ausbreitungsrichtung ABR2 des vom Faltspiegel 15 kommend auf ihn auftreffenden Lichts L2 geneigt ist, und die spiegelnden zweiten Flächen 162 parallel zum reflektierenden Polarisator 172 angeordnet sind.

Fig. 7 zeigt schematisch einen Teil einer dritten, hier nicht beanspruchten, Ausführungsform. Hier weist der Faltspiegel 15 eine erste Grenzfläche 151 und eine zweite Grenzfläche 152 auf, die beide zueinander parallel angeordnet sind, und zueinander versetz angeordnete Mikrostrukturen 16,16' aufweisen. Der Versatz ist im dargestellten Ausführungsbeispiel so gewählt, dass in Ausbreitungsrichtung ABR1 des von der Lichtquelle 12 kommenden Lichts L1 erste Spiegelflächen 161 der ersten Grenzfläche 151 und erste Spiegelflächen 161' der zweiten Grenzfläche 152 aufeinander folgen. In der dazu senkrechten Ausbreitungsrichtung ABR2 folgen jeweils erste Spiegelflächen 161 der ersten Grenzfläche 151 und zweite Flächen 162' der zweiten Grenzfläche 152 aufeinander, sowie zweite Flächen 162 der ersten Grenzfläche 151 und erste Spiegelflächen 161' der zweiten Grenzfläche 152 aufeinander. Die Spiegelflächen 161 der ersten Grenzfläche 151 sind als spiegelnder Polarisator 17 ausgebildet. Die zweiten Flächen 162 der ersten Grenzfläche 151 sind als die Polarisationsrichtung um 90° drehender Retarder 18 ausgebildet. Die ersten Spiegelflächen 161' der zweiten Grenzschicht 152 sind als die Polarisation nicht beeinflussende Spiegel ausgebildet. Die erste Spiegelflächen 161,161' sind im Winkel von 45° sowohl zur Ausbreitungsrichtung ABR1 des von der Lichtquelle 12 kommenden Lichts L1 als auch zur Ausbreitungsrichtung ABR2 des zum Anzeigeelement 11 verlaufenden Lichts angeordnet. Die zweiten Flächen 162,162' sind parallel zur Ausbreitungsrichtung ABR1 des von der Lichtquelle 12 kommenden Lichts L1 angeordnet.

Von links fällt von der Lichtquelle 12 erzeugtes und vom Kollimator 13 kollimiertes unpolarisiertes Licht L1 in Ausbreitungsrichtung ABR1 auf den Faltspiegel 15. Der Übersichtlichkeit halber ist hier nur ein Lichtstrahl beispielhaft eingezeichnet. Dieses unpolarisierte Licht L1 wird von den Spiegelflächen 161 als s-polarisiertes Licht L2s reflektiert und als p-polarisiertes Licht L2p transmittiert. Das s-polarisierte Licht L2s gelangt in Ausbreitungsrichtung ABR2 Richtung Anzeigeelement 11. Das p-polarisierte Licht L2p wird von den ersten Spiegelflächen 161' der zweiten Grenzfläche 152 reflektiert und gelangt als p-polarisiertes Licht L3p von innen zu den zweiten Flächen 162 der ersten Grenzfläche 151. Da diese als die Polarisation um 90° drehende Retarder 18 ausgebildet sind, transmittieren sie das auf sie auftreffende Licht, welches sie als s-polarisiertes Licht L4s in Ausbreitungsrichtung ABR2 im Bereich der Lücken 163 verlässt. Somit gelangt weiteres s-polarisiertes Licht L4s Richtung Anzeigeelement 11.

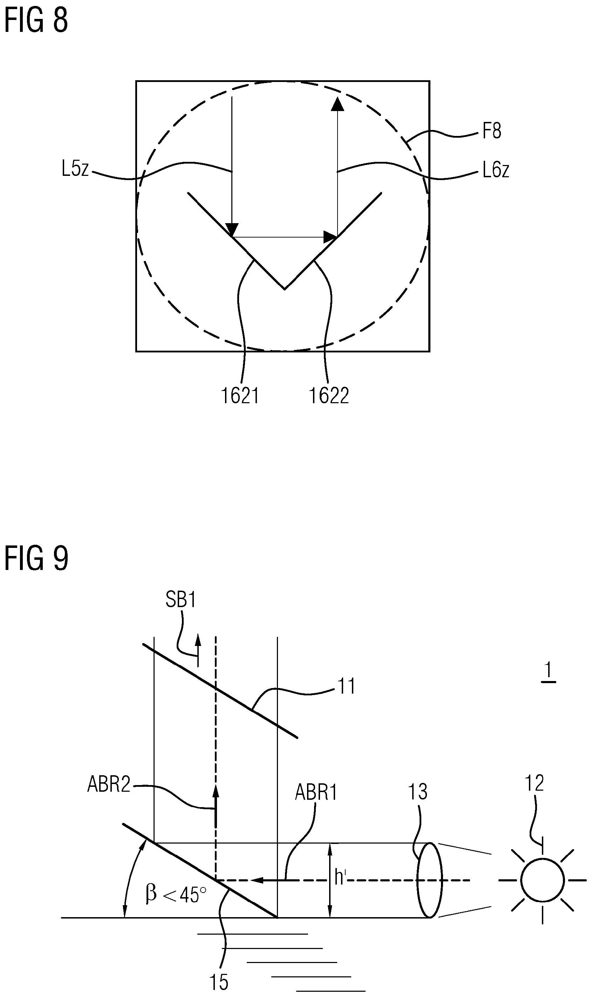

Fig.8 zeigt den in Fig.5 markierten Bereich F8 in einer vorteilhaften Variante. Anstatt einer einzigen Fläche sind hier zwei spiegelnde zweite Flächen 1621,1622 vorgesehen, die in einem rechten Winkel zueinander angeordnet sind. Sie wirken daher als Retroreflektor. Einfallendes Licht L5z wird dabei auf jeden Fall so reflektiert, daß das ausfallende Licht L6z parallel zu ihm ausgerichtet ist. Während bei der in Fig.5 gezeigten Variante einfallendes und ausfallendes Licht nur dann parallel zueinander sind, wenn das einfallende Licht genau rechtwinklig auf die spiegelnde Fläche 162 trifft, ist dies bei einem Retroreflektor auch bei Winkelabweichung der Fall.

Fig.9 zeigt eine bildgebende Einheit 1 ähnlich wie zu Fig.3 beschrieben. Hier ist allerdings das Anzeigeelement 11 im gleichen Winkel β angeordnet wie der Faltspiegel 15. Faltspiegel 15 und Anzeigeelement 11 sind somit parallel zueinander ausgerichtet. Lichtstrahlen, die vom Faltspiegel 15 kommend auf das Anzeigeelement 11 treffen habe daher eine gleichlange Wegstrecke hinter sich. Eine gleichförmige Beleuchtung des Anzeigeelements 11 wird somit erzielt, da durch Wegstreckenunterschiede hervorgerufene Abweichungen in dieser Konstellation nicht auftreten. Dies ist insbesondere vorteilhaft bei Verwendung eines flächigen Anzeigeelements 11, das beispielsweise aus einem einzigen flächigen Leuchtelement besteht, oder aus einem LED-Array bei dem mehrere LEDs auf einer Fläche verteilt angeordnet sind. Dieser Vorteil tritt auch dann ein, wenn allgemein in einem Head-Up-Display ein Faltspiegel mit der Eigenschaft daß Einfallswinkel und Ausfallswinkel makroskopisch gesehen ungleich sind parallel zu einem Anzeigeelement dieses Head-Up-Displays ausgerichtet ist.

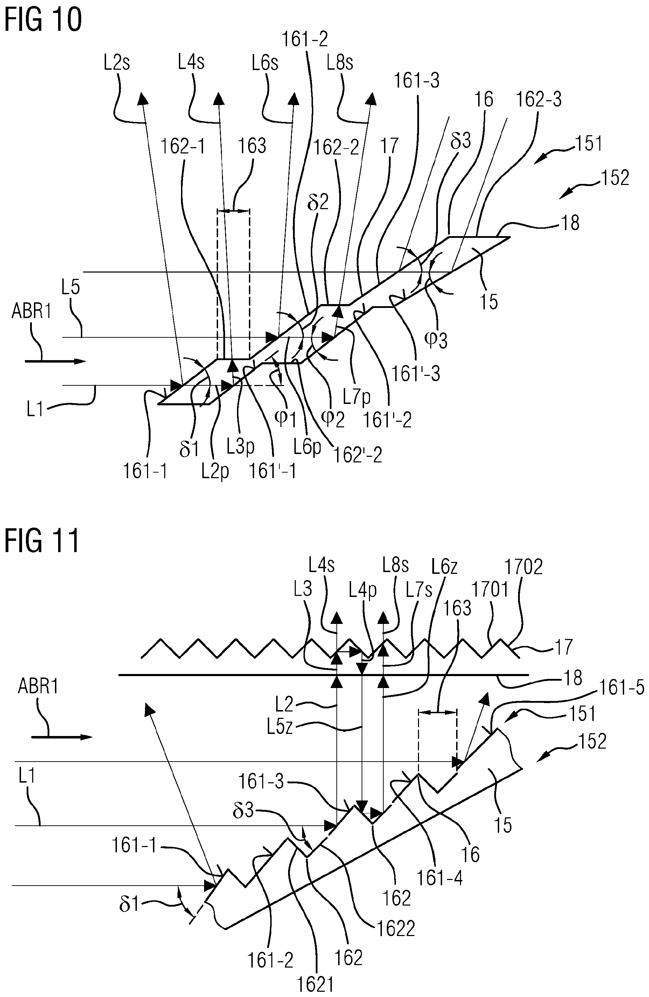

Fig.10 zeigt schematisch einen Teil einer ersten erfindungsgemäßen Ausführungsform mit gekrümmtem Faltspiegel 15. Dabei ist der Faltspiegel 15 makroskopisch gesehen nicht gekrümmt, sondern die Mikrostrukturen 16 sind so angeordnet, dass der Faltspiegel 15 wie ein Zylinderspiegel wirkt. Der Faltspiegel 15 weist zwei zueinander parallele Grenzflächen 151,152 auf. Die obere Grenzfläche 151 ist die Grenzfläche, die das einfallende Licht L1 zuerst erreicht. Die obere Grenzfläche 151 weist erste Spiegelflächen 161-i mit i=1,2,3,... auf, von denen im hier dargestellten Ausführungsbeispiel die Spiegelflächen 161-1, 161-2 und 161-3 gezeigt sind. Die obere Grenzfläche 151 weist zweite Flächen 162-i auf mit i=1,2,3,..., von denen im hier dargestellten Ausführungsbeispiel die zweiten Flächen 162-1, 162-2 und 162-3 gezeigt sind. Diese befinden sich in Lücken 163 zwischen den Spiegelflächen 161-i. Die untere Grenzfläche 152 ist diejenige, auf die Licht L2p trifft, welches durch die obere Grenzfläche 151 hindurch transmittiert ist. Die untere Grenzfläche 152 weist Spiegelflächen 161'-1, 161'-2 und 161'-3 auf.

Die erste Spiegelfläche 161-1 der gezeigten ersten Spiegelflächen 161-i weist einen ersten Winkel δ1 zur Ausbreitungsrichtung ABR1 auf, die erste Spielfläche 161-2 weist einen ersten Winkel δ2 zur Ausbreitungsrichtung ABR1 auf, und die erste Spielfläche 161-3 weist einen ersten Winkel δ3 zur Ausbreitungsrichtung ABR1 auf. Dabei unterscheiden sich die ersten Winkel δ1, δ2 und δ3 geringfügig voneinander. Somit weist jede der ersten Spiegelflächen 161-i einen anderen ersten Winkel δi auf. Die erste Spiegelfläche 161'-1 der unteren Grenzfläche 152 weist einen zweiten Winkel φ1 zur Ausbreitungsrichtung ABR1 auf. Die erste Spiegelfläche 161'-2 weist einen zweiten Winkel φ2 zur Ausbreitungsrichtung ABR1 auf. Die erste Spiegelfläche 161'-3 weist einen zweiten Winkel φ3 zur Ausbreitungsrichtung ABR1 auf. Somit weist jede der ersten Spiegelflächen 161'-i der unteren Grenzfläche 152 einen anderen zweiten Winkel φi auf als die jeweils anderen ersten Spiegelflächen 161'-i. Die ersten Winkel δi und die zweiten Winkel φi nehmen im gezeigten

Ausführungsbeispiel von links nach rechts ab. Es gilt:
δ1<φ1<δ2<φ2<δ3<φ3. Somit liegt der Wert jedes zweiten Winkels φi zwischen den Werten der ersten Winkel δi zweier benachbarter ersten Spiegelflächen 161-i. Die Lichtstrahlen Lxs, die den Faltspiegel 15 nach oben verlassen sind somit gleichmäßig aufgefächert. Die zweiten Flächen 162-i,162-i' sind parallel zur Ausbreitungsrichtung ABR1 des von der Lichtquelle 12 kommenden Lichts L1 angeordnet.

Die Spiegelflächen 161-i der oberen Grenzfläche 151 sind als spiegelnder Polarisator 17 ausgebildet. Die zweiten Flächen 162-i der ersten Grenzfläche 151 sind als die Polarisationsrichtung um 90° drehender Retarder 18 ausgebildet. Die ersten Spiegelflächen 161'-i der unteren Grenzschicht 152 sind als die Polarisation nicht beeinflussende Spiegel ausgebildet.

Von links fällt von der Lichtquelle 12 erzeugtes und vom Kollimator 13 kollimiertes unpolarisiertes Licht L1 in Ausbreitungsrichtung ABR1 auf den Faltspiegel 15. Der Übersichtlichkeit halber sind hier nur einige Lichtstrahlen beispielhaft eingezeichnet. Dieses unpolarisierte Licht L1, L5 wird von den Spiegelflächen 161-i als s-polarisiertes Licht L2s, L6s reflektiert und als p-polarisiertes Licht L2p, L6p transmittiert. Das s-polarisierte Licht L2s, L6s gelangt nach oben Richtung Anzeigeelement 11. Das p-polarisierte Licht L2p, L6p wird von den ersten Spiegelflächen 161'-1, 161'-2 der zweiten Grenzfläche 152 reflektiert und gelangt als p-polarisiertes Licht L3p, L7p von innen zu den zweiten Flächen 162-i der ersten Grenzfläche 151. Da diese als die Polarisation um 90° drehende Retarder 18 ausgebildet sind, transmittieren sie das auf sie auftreffende Licht, welches sie als s-polarisiertes Licht L4s, L8s in der Abbildung nach oben im Bereich der Lücken 163 verlässt. Somit gelangt weiteres s-polarisiertes Licht L4s, L8s Richtung Anzeigeelement 11. Man erkennt, daß das Richtung Anzeigeelement 11 verlaufende Licht Lxs aus aufgefächerten Lichtstrahlen besteht.

Fig.11 zeigt schematisch einen Teil einer hier nicht beanspruchtenAusführungsform mit gekrümmtem Faltspiegel 15. Auch hier ist der Faltspiegel 15 makroskopisch gesehen nicht gekrümmt, sondern die Mikrostrukturen 16 sind so angeordnet, daß der Faltspiegel 15 wie ein Zylinderspiegel wirkt. Die obere Grenzfläche 151 des Faltspiegels 15 weist Mikrostrukturen 16 auf, und seine untere Grenzfläche 152 weist keine besonderen optischen oder geometrischen Eigenschaften auf. Die Mikrostrukturen 16 weisen erste Spiegelflächen 161-i auf, von denen die Spiegelflächen 161-1 bis 161-5 gezeigt sind. Jede der ersten Spiegelflächen 161-i weist einen ersten Winkel δi zur Ausbreitungsrichtung ABR1 des einfallenden Lichts auf, der sich von den anderen ersten Winkeln δi unterscheidet. Zwischen den ersten Spiegelflächen 161-i befinden sich Lücken 163, in denen zweite Flächen 162 angeordnet sind, die ebenfalls als spiegelnde Flächen ausgelegt sind. Als zweiten Flächen 162 sind anstatt jeweils einer einzigen Fläche zwei spiegelnde zweite Flächen 1621,1622 vorgesehen, die in einem rechten Winkel zueinander angeordnet sind. Sie wirken daher als Retroreflektor. Oberhalb des Faltspiegels 15 sind ein Retarder 18 und ein Polarisator 17 angeordnet. Der Retarder 18 hat im vorliegenden Ausführungsbeispiel die Eigenschaft einer Viertelwellenlängenplatte, das heißt, er wandelt linear polarisiertes Eingangslicht in zirkular polarisiertes Ausgangslicht um, und umgekehrt. Der Polarisator 17 ist ein reflektierender Polarisator, der linearpolarisiertes Licht einer erste Polarisationsrichtung passieren lässt, und senkrecht dazu polarisiertes Licht reflektiert. Anstatt einer einzigen Fläche weist der Polarisator eine Vielzahl von paarweise angeordneten Polarisatorflächen 1701,1702 auf, die in einem rechten Winkel zueinander angeordnet sind. Sie wirken daher als Retroreflektor.

Von links fällt von der Lichtquelle 12 erzeugtes und vom Kollimator 13 kollimiertes unpolarisiertes Licht L1 in Ausbreitungsrichtung ABR1 auf den Faltspiegel 15. Der Übersichtlichkeit halber sind hier nur einige Lichtstrahlen beispielhaft eingezeichnet. Dieses unpolarisierte Licht L1 wird von den Spiegelflächen 161-3 reflektiert. Es gelangt nach oben als unpolarisiertes Licht L2 zum Retarder 18, passiert diesen und verlässt diesen als unpolarisiertes Licht L3. Es trifft auf den als Retroreflektor ausgebildeten reflektierenden Polarisator 17, der s-polarisiertes Licht L4s passieren lässt (transmittiert) und p-polarisiertes Licht L4p zurückwirft (reflektiert). Das p-polarisierte Licht L4p passiert den Retarder 18 und verlässt diesen als zirkular polarisiertes Licht L5z. Dieses trifft auf eine der ebenfalls als Retroreflektor ausgebildeten spiegelnden zweiten Flächen 162 und wird von diesen als zirkular polarisiertes Licht L6z wieder zum Retarder 18 reflektiert. Es passiert diesen und verlässt diesen als s-polarisiertes Licht L7s. Dieses passiert den reflektierenden Polarisator 17 da es nun die Polarisationsrichtung aufweist, die er nicht reflektiert, sondern transmittiert. Somit gelangt weiteres s-polarisiertes Licht L8s Richtung Anzeigeelement 11.

Gemäß einer hier nicht näher ausgeführten weiteren Variante ist ein transparenter Körper 19 wie zu Fig.6 beschrieben vorgesehen, der mit entsprechenden Mikrostrukturen versehen ist. Die Funktion von reflektierendem Polarisator 17 und von Retarder18 ist dort in einem zirkularem Polarisator 172 realisiert, der mittels erster und zweiter Polarisatorflächen 1701 und 1702 als Retroreflektor ausgebildet ist.

Mit anderen Worten betrifft die Erfindung ein Head-Up-Display mit effizienzgesteigerter, kosten- und bauraumsparender bildgebenden Einheit 1, die einen Faltspiegel 15 aufweist, bei dem makroskopisch Einfallswinkel und Ausfallswinkel ungleich sind. Eine solche Einheit wird englisch auch als "blazed-mirror-PGU" (PGU: Picture Generating Unit - bildgebende Einheit) bezeichnet. Die Erfindung betrifft das Gebiet Head-Up-Displays (HUD), und andere Displaysysteme, die gerichtetes Licht einer bestimmten Polarisation nutzen, beispielsweise basierend auf Flüssigkristallanzeigeelementen. Die meisten aktuellen LED-basierte TFT-HUDs (TFT: Thin Film Transistor, Dünnfilmtransistor - eine Variante von Flüssigkristallanzeigen) haben einen fast vollständigen Lichtleistungsverlust für eine Polarisationskomponente des Beleuchtungslichts. Typischerweise wird dieser Lichtleistungsverlust in einem externen Polarisationsfilter realisiert, um die Erwärmung des Anzeigeelements 11 zu verringen. Es gibt erste Systeme auf dem Markt und in der Literatur, die Teile des "falsch" polarisierten Lichts wiederverwenden. Diese effizienzgesteigerten Systeme erfordern zusätzliche Komponenten und damit zusätzlichen Bauraum und Kosten. Die konventionellen Systeme benötigen mehr Energie, auf die zunehmend geachtet wird (z.B. Reichweite Elektromobilität). Die thermische Last wird insbesondere mit wachsenden Bildgrößen zunehmend kritischer für die Systeme/Komponenten. Erwünscht sind einzeln oder in Kombination: Effizienzsteigerung, Bauraumreduktion oder Vergrößerung des virtuellen Bildes bei gleichbleibendem Bauraum, Kostenreduktion, Homogenisierung der Ausleuchtung. Zumindest eines davon wird erfindungsgemäß erreicht.

Bei Anwendung eines Faltspiegel, bei dem Einfallswinkel und Ausfallswinkel ungleich sind (blazed mirror) entstehen aus Sicht des Anzeigeelements 11 Streifen, von denen kein Licht ausgeht. Diese Bereiche, die Lücken 163, werden erfindungsgemäß dazu genutzt, um Licht der unerwünschten Polarisationskomponenten wiederzuverwenden, indem ihr Polarisationszustand verändert und wieder zum Anzeigeelement 11 geleitet und damit zu dessen Hinterleuchtung nutzbar gemacht wird. Das **HUD** ist dadurch günstiger, hat einen geringeren Energie-, Bauraum- und/oder Kühlungsbedarf und eine homogenere Ausleuchtung. Die Erfindung ist auch allgemeiner anwendbar auf andere effizienzsensible hinterleuchtete Anzeigeelemente mit schmalerem Blickwinkel. Auch auf Projektionssysteme, beispielsweise beruhend auf DMD-Technologie (DMD: Digital Micromirror Device - Lichtablenkung des Geräts beruht auf einem oder mehreren digital angesteuerten Mikrospiegeln), oder auf LCoS-Technologie (LCoS: Liquid Crystal on Silicon - Lichtmodulation beruht auf Flüssigkristallen, die auf einem Siliziumträger angebracht sind), ist die Erfindung anwendbar. Es handelt sich dann um eine Anzeigeeinheit mit einer bildgebenden Einheit 1 zum Erzeugen eines Bildes, wobei die bildgebende Einheit einen Faltspiegel aufweist, der Faltspiegel zwischen einer Lichtquelle und einem von dieser durchleuchteten Anzeigeelement in einem Anstellwinkel zur Ausbreitungsrichtung des von der Lichtquelle auf ihn einfallenden Lichts angeordnet ist, der Faltspiegel Mikrostrukturen aufweist, wobei die Mikrostrukturen erste Spiegelflächen aufweisen, die in einem vom Anstellwinkel des Faltspiegels abweichenden ersten Winkel angeordnet sind, und Lücken bildend voneinander beabstandet sind, wobei in den Lücken zweite Flächen in einem zweiten Winkel angeordnet sind, ein Polarisator Licht einer ersten Polarisation zum Anzeigeelement leitet, und Licht einer zweiten Polarisation in die Lücken leitet, ein Retarder die Polarisation des in die Lücken geleiteten Lichts in die erste Polarisation umwandelt, und das in die Lücken geleitete Licht nach Passieren der Lücken Richtung Anzeigeelement geleitet wird. Das Licht unerwünschter Polarisation wird gemäß einer Variante von einem reflektiven zirkularen Polarisator 172 unter dem Display zum Faltspiegel 15 zurückgeworfen, wo es in den bisherigen Totzonen, den Lücken 163, reflektiert, dann vom zirkularen Polarisator 172 in die Nutzrichtung gewandelt und somit wiederverwendet wird.

Gemäß einer Variante erfolgt eine Optimierung des Winkels, in dem der Faltspiegel, der auch als Blazed Mirror bezeichnet wird, angeordnet ist, auf eine Verkippung des Anzeigeelements. Eine Vorteilhafte Ausführung besteht darin, den Blazed Mirror möglichst parallel zum Anzeigeelement auszurichten. Dann werden dessen Strukturen am gleichmäßigsten verwischt. Bei aktuell im Einsatz befindlichen bildgenerierenden Einheiten mit LED-Arrays gibt es zum Teil deutliche relative Unterschiede im Abstand der LEDs zu einem unter dem Anzeigeelement angeordneten Streuelement, weil das Anzeigeelement verkippt ist. Das führt zu unterschiedlich starker Sichtbarkeit des LED-Arrays. Dieser unerwünschte Effekt wird mit dem Ansatz, Faltspiegel und Anzeigeelement parallel auszurichten, stark reduziert. Gleicher Abstand des Anzeigeelements zum Faltspiegel bedeutet geringere relative Wegunterschiede.

Eine Astigmatismus-Funktion, also eine Auffächerung des zum Anzeigeelement 11 gelangenden Lichts wird gemäß von Varianten der Erfindung wie folgt erreicht. Die Winkel δi der Flächen 161-i, die das von links einfallende Licht reflektieren, ändern ihren Winkelwert allmählich. Es liegt also kein Faltspiegel 15 im engeren Sinn mehr vor, sondern der so ausgebildete Faltspiegel 15 ist in einer Richtung gekrümmt. Also liegt ein sogenannter geblazter Zylinderspiegel vor. Dieser darf aber ruhig facettiert sein, also mit ebenen Spiegelflächen 161-i ausgestattet sein, wie zum Beispiel in Fig.11 gezeigt. Dort hat man es nach Reflexion am Faltspiegel 15 mit Licht zu tun, welches nicht mehr senkrecht auf den reflektierenden Polarisator 17 auftrifft. Das reflektierte Lichtbündel würde also auseinanderlaufen. Daher ist im Ausführungsbeispiel der Fig.11 vorgesehen, beide reflektierende Strukturen als Retroreflektor auszulegen, sodass das recycelte Licht auch die gewünschte Abstrahlrichtung zum jeweiligen Ort hat.

## Patentansprüche

1. Head-Up-Display für ein Fortbewegungsmittel, mit:
- einer bildgebenden Einheit (1) zum Erzeugen eines Bildes;
- einer Optikeinheit (2) zum Projizieren des Bildes mittels einer Spiegeleinheit (3); wobei
- die bildgebende Einheit (1) einen Faltspiegel (15) aufweist,
- der Faltspiegel (15) zwischen einer Lichtquelle (12) und einem von dieser durchleuchteten Anzeigeelement (11) in einem Anstellwinkel (β) zur Ausbreitungsrichtung (ABR1) des von der Lichtquelle (11) auf ihn einfallenden Lichts (L1) angeordnet ist,
- der Faltspiegel (15) Mikrostrukturen (16) aufweist,
-- wobei die Mikrostrukturen (16) erste Spiegelflächen (161-i, 161'-i) aufweisen, die in einem vom Anstellwinkel (β) des Faltspiegels (15) abweichenden ersten Winkel (φi, δi) angeordnet sind, und Lücken (163) bildend voneinander beabstandet sind,
-- wobei in den Lücken (163) zweite Flächen (162-i, 162'-i) in einem zweiten Winkel angeordnet sind,
**dadurch gekennzeichnet, dass**
- der Faltspiegel (15) zwei zueinander parallele Grenzflächen (151,152) aufweist, von denen jeweils die obere Grenzfläche (151) obere erste Spiegelflächen (161-i) und die untere Grenzfläche (152) untere erste Spiegelflächen (161'-i) aufweist,
- die unteren ersten Spiegelflächen (161'-i) untereinander andere untere erste Winkel (φi) aufweisen, und
- der Wert jedes unteren ersten Winkels (φi) zwischen den Werten der oberen ersten Winkel (δi) zweier benachbarter erster Spiegelflächen (161-i) liegt,
wobei die oberen ersten Spiegelflächen (161-i) als reflektierender Polarisator (17) ausgebildet sind, und die zweiten Flächen (162-i) der oberen Grenzfläche (151) als die Polarisationsrichtung um 90° drehende Retarder (18) ausgebildet sind, derart, dass
- der Polarisator (17) Licht einer ersten Polarisation zum Anzeigeelement (11) leitet, und Licht einer zweiten Polarisation in die Lücken (163) leitet,
- der Retarder (18) die Polarisation des in die Lücken (163) geleiteten Lichts (L2p,L4p) in die erste Polarisation umwandelt, und
- das in die Lücken (163) geleitete Licht nach Passieren der Lücken (163) Richtung Anzeigeelement (11) geleitet wird.

2. Head-Up-Display gemäß Anspruch 1, wobei der reflektierende Polarisator (17) in einem von 90° abweichenden Winkel zur Ausbreitungsrichtung (ABR2) des vom Faltspiegel (15) kommend auf ihn auftreffenden Lichts (L2) geneigt ist, und die spiegelnden zweiten Flächen (162) parallel zum reflektierenden Polarisator (17) angeordnet sind.

3. Head-Up-Display gemäß Anspruch 2, wobei der Faltspiegel (15) Teil eines transparenten Körpers (19) mit keilförmigem Querschnitt ist, bei dem die Keilgrundfläche (191) die der Lichtquelle (12) zugewandte Lichteintrittsfläche ist, die Mikrostrukturen (16) auf einer der großen Seitenflächen (192) angeordnet sind, und die andere große Seitenfläche (193) die dem Anzeigeelement (11) zugewandte Lichtaustrittsfläche ist.

4. Head-Up-Display gemäß einem der vorhergehenden Ansprüche, wobei Faltspiegel (15) und Anzeigeelement (11) parallel zueinander ausgerichtet sind.

## Claims

1. A head-up display for a means of transportation, comprising:
- an imaging unit (1) for generating an image;
- an optical unit (2) for projecting the image by means of a mirror unit (3); wherein
- the imaging unit (1) has a folding mirror (15),
- the folding mirror (15) is arranged between a light source (12) and a display element (11), through which the light source radiates light, at an angle of inclination (β) in relation to the propagation direction (ABR1) of the light (L1) that is incident on the folding mirror from the light source (11),
- the folding mirror (15) has microstructures (16),
-- wherein the microstructures (16) have first mirror surfaces (161-i, 161'-i) that are arranged at a first angle, which deviates from the angle of inclination (β) of the folding mirror (15), and are spaced apart from one another to form gaps (163),
-- wherein second surfaces (162-i, 162'-i) are arranged in the gaps (163) at a second angle,
**characterized in that**
- the folding mirror (15) has two mutually parallel interfaces (151, 152), of which in each case the upper interface (151) has upper first mirror surfaces (161-i) and the lower interface (152) has lower first mirror surfaces (161'-i),
- the lower first mirror surfaces (161'-i) have lower first angles (φi) that differ from one another, and
- the value of each lower first angle (φi) is between the values of the upper first angles (δi) of two adjacent first mirror surfaces (161-i), wherein the upper first mirror surfaces (161-i) are designed as a reflective polarizer (17), and the second surfaces (162-i) of the upper interface (151) are designed as retarders (18) rotating the polarization direction by 90°, such that
- the polarizer (17) guides light having a first polarization to the display element (11) and light having a second polarization into the gaps (163),
- the retarder (18) converts the polarization of the light (L2p, L4p) guided into the gaps (163) to the first polarization, and
- the light guided into the gaps (163) is guided in the direction of the display element (11) after passing through the gaps (163).

2. The head-up display as claimed in claim 1, wherein the reflective polarizer (17) is inclined at an angle deviating from 90° to the propagation direction (ABR2) of the light (L2) coming from the folding mirror (15), which is incident thereon, and the reflecting second surfaces (162) are arranged parallel to the reflective polarizer (17).

3. The head-up display as claimed in claim 2, wherein the folding mirror (15) is part of a transparent body (19) with a wedge-shaped cross section, in which the wedge base surface (191) is the light entrance surface facing the light source (12), the microstructures (16) are arranged on one of the large side faces (192), and the other large side face (193) is the light exit surface facing the display element (11).

4. The head-up display as claimed in any one of the preceding claims, wherein the folding mirror (15) and the display element (11) are aligned parallel to each other.

## Revendications

1. Affichage tête haute pour moyen de transport, avec :
- une unité d'imagerie (1) pour générer une image ;
- une unité optique (2) pour projeter l'image au moyen d'une unité de miroir (3) ; dans lequel
- l'unité d'imagerie (1) présente un miroir pliant (15),
- le miroir pliant (15) est disposé entre une source lumineuse (12) et un élément d'affichage (11) éclairé par cette dernière selon un angle d'inclinaison (β) par rapport à la direction de propagation (ABR1) de la lumière (L1) incidente sur ledit miroir depuis la source lumineuse (11),
- le miroir pliant (15) présente des microstructures (16),
-- dans lequel les microstructures (16) présentent des premières surfaces de miroir (161-i, 161'-i) qui sont disposées selon un premier angle (φi, δi) qui diffère de l'angle d'inclinaison (β) du miroir pliant (15), et sont espacées les unes des autres de manière à former des espaces (163),
-- dans lequel, dans les espaces (163), des secondes surfaces (162-i, 162'-i) sont disposées selon un second angle,
**caractérisé en ce que**
- le miroir pliant (15) présente deux interfaces mutuellement parallèles (151, 152), dont respectivement l'interface supérieure (151) présente des premières surfaces de miroir supérieures (161-i) et l'interface inférieure (152) présente des premières surfaces de miroir inférieures (161'-i),
- les premières surfaces de miroir inférieures (161'-i) présentent des premiers angles inférieurs (φi) différents les unes par rapport aux autres, et
- la valeur de chaque premier angle inférieur (φi) se situe entre les valeurs des premiers angles supérieurs (δi) de deux premières surfaces de miroir adjacentes (161-i), dans lequel les premières surfaces de miroir supérieures (161-i) sont configurées comme des polariseurs réfléchissants (17), et les secondes surfaces (162-i) de l'interface supérieure (151) sont configurées comme des retardateurs (18) faisant pivoter la direction de polarisation de 90°, de sorte que
- le polariseur (17) dirige la lumière d'une première polarisation vers l'élément d'affichage (11) et dirige la lumière d'une seconde polarisation dans les espaces (163),
- le retardateur (18) convertit la polarisation de la lumière (L2p,L4p) dirigée dans les espaces (163) en la première polarisation, et
- la lumière dirigée dans les espaces (163) est dirigée vers l'élément d'affichage (11) après avoir traversé les espaces (163).

2. Affichage tête haute selon la revendication 1, dans lequel le polariseur réfléchissant (17) est incliné selon un angle différent de 90° par rapport à la direction de propagation (ABR2) de la lumière (L2) qui le frappe en provenance du miroir pliant (15), et les secondes surfaces réfléchissantes (162) sont disposées parallèlement au polariseur réfléchissant (17).

3. Affichage tête haute selon la revendication 2, dans lequel le miroir pliant (15) fait partie d'un corps transparent (19) à section transversale en forme de coin, dont la surface de base du coin (191) constitue la surface d'entrée de la lumière tournée vers la source lumineuse (12), les microstructures (16) étant disposées sur l'une des grandes surfaces latérales (192), et l'autre grande face latérale (193) constitue la surface de sortie de la lumière tournée vers l'élément d'affichage (11).

4. Affichage tête haute selon l'une des revendications précédentes, dans lequel le miroir pliant (15) et l'élément d'affichage (11) sont alignés parallèlement l'un à l'autre.
